(19) Europäisches Patentamt
European Patent Office
Office européen des brevets

(11) EP 0 957 340 A2

(12) **EUROPÄISCHE PATENTANMELDUNG**

(43) Veröffentlichungstag:
17.11.1999 Patentblatt 1999/46

(51) Int. Cl.6: **G01C 9/00**, B60T 8/00

(21) Anmeldenummer: 99108896.4

(22) Anmeldetag: 05.05.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 15.05.1998 DE 19821618

(71) Anmelder: DaimlerChrysler AG
70567 Stuttgart (DE)

(72) Erfinder:
• Gesele, Frank
85053 Ingolstadt (DE)
• Maier, Holger
71409 Schwaikheim (DE)

(74) Vertreter: Kolb, Georg et al
DaimlerChrysler AG,
Postfach 35 35
74025 Heilbronn (DE)

(54) **Verfahren zum Erkennen von seitlich geneigten Kurven**

(57) Bei bisherigen fahrdynamischen Stabilitätsregelungen ergeben sich beim Durchfahren von quergeneigten Kurven Probleme. Bisherige Regelungen arbeiten in diesem Zustand nicht oder nur unzuverlässig. Dieses Verfahren soll es ermöglichen, daß eine geneigte Kurvenfahrt mit einfachen Mitteln zuverlässig erkannt wird.

Bei diesem Verfahren wird ein kurvenspezifischer Wert, wie z.B. Drehrate, Querbeschleunigung oder Lenkwinkel mit unterschiedlichen Meßsystemen, die auf unterschiedliche physikalische Verfahren beruhen, zeitgleich ermittelt und deren unterschiedliche Größe, die sich aufgrund der Meßfehler in geneigten Kurven ergeben, zur Erkennung der seitlich geneigten Kurve verwendet.

Diese Verfahren eignet sich zur Erkennung von seitlich geneigten Kurven, insbesondere für fahrdynamische Stabilitätsregelungen.

FIG. 3A

EP 0 957 340 A2

**Beschreibung**

Die Erfindung **betrifft** ein Verfahren zur Erkennung von seitlich geneigten Kurven gemäß dem Oberbegriff des Patentanspruchs 1.

Bei der Bestimmung oder Beurteilung einer Fahrsituation im Rahmen einer fahrdynamischen Stabilitätsregelung, wie beispielsweise beim ESP (**E**lektronisches **S**tabilitäts-**P**rogramm), ergeben sich beim Durchfahren einer seitlich geneigten Kurve, die sich durch eine Querneigung gegenüber der Horizontalen auszeichnet, Fehler in der Bewertung des Fahrzeugzustandes. Eine Ursache hierfür liegt darin, daß Parameter, die den jeweiligen Fahrzeugszustand charakterisieren, zusätzlich durch die Gravitation oder Zentrifugalkräfte beeinflußt werden. Eine seitlich geneigte Kurve kann im Extremfall ohne Lenkradbetätigung durchfahren werden. Von einer fahrdynamischen Stabilitätsregelung wird das Fehlen des Lenkradausschlages bemerkt, jedoch eine Drehrate bezüglich der Z-Achse und eine Querbeschleunigung bezüglich der Y-Achse erfaßt. Dies führt dazu, daß die fahrdynamische Stabilitätsregelung aktiviert wird und falsche Eingriffe in die Fahrdynamik initiiert. Des weiteren können Fehlauslösungen von Kraftfahrzeugsicherheitssystemen auftreten. Aus diesem Grund muß beispielsweise im Extremfall das ESP beim Durchfahren einer seitlich geneigten Kurve vom Fahrer abgeschaltet werden.

In der DE 43 25 413 C2 wird ein Verfahren zur Bestimmung von Parametern, die den Fahrzustand des Kraftfahrzeugs charakterisieren, wie Drehrate, Querbeschleunigung, Lenkwinkel, Geschwindigkeit, Beschleunigung, Raddrehzahlen usw., offenbart. Hier wird für eine exakte Berechnung des Fahrzeugzustandes der Neigungswinkel als Zustandsgröße benötigt. Nachteilig hierbei ist jedoch, daß kein Hinweis darauf gegeben wird, wie ein Neigungswinkel qualitativ oder quantitativ erfaßt wird.

Es sind verschiedene Verfahren bekannt, um die Fahrzeugneigung bzw. die Fahrbahnneigung gegenüber der Horizontalen zu erfassen.

In der EP 0 769 701 A1 wird eine Vorrichtung für ein Fahrzeug offenbart, die zwei Beschleunigungssensoren beinhaltet. Diese beiden Beschleunigungssensoren sind in einem definierten Winkel zur Horizontalebene angeordnet. Ohne Fahrzeugneigung zeigen die Beschleunigungssensoren dieselbe Abweichung von der tatsächlich vorliegenden Fahrzeugquerbeschleunigung an. Entsprechend ihrer Fahrzeugneigung läßt sich mit Hilfe einer Differenz und Summenbildung der beiden Sensorsignale die Fahrzeugneigung und hieraus die tatsächliche Fahrzeugbeschleunigung berechnen.

**Nachteilig** hierbei ist jedoch, daß mehrere Beschleunigungssensoren benötigt werden und daß diese Beschleunigungssensoren nur dazu dienen, eine Querneigung des Kraftfahrzeuges zu erkennen. Diese Lösung erweist sich als sehr kostenintensiv. Auch wird hierfür zusätzlich Platz benötigt. Ein weiterer Nachteil besteht darin, daß die beiden identischen, aber unterschiedlich eingebauten Meßsysteme nicht zuverlässig in jeder Fahrsituation den richtigen Neigungswinkel der Fahrbahn erkennen, beim Schleudern oder bei Fahrbahnunebenheiten fälschlicherweise einen Neigungswinkel anzeigen.

Ein anderes Verfahren zur Bestimmung der Fahrbahnneigung in Längsrichtung wird in der DE 44 43 522 A1 offenbart. Hier wird zumindest einmal ein frei rollender Zustand, zumindest einer angetriebenen Achse des Fahrzeuges erkannt. In diesem Zustand rollen auch die Räder der angetriebenen Achsen schlupffrei. Im Sinne des Abgleichs der Raddrehzahlen zwischen den angetriebenen Achsen wird die Differenzdrehzahl einer nicht angetriebenen Achse ermittelt. Gleichzeitig wird der Wert der Abbremsung, also der Fahrzeugverzögerung gemessen. Aus den ermittelten Werten der Differenzdrehzahl und der Abbremsungen wird der Wert einer Neigungskonstanten ermittelt. Mit der Neigungskonstanten kann aus den ermittelten Werten der Differenzdrehzahl und Abbremsung die Fahrbahnneigung bestimmt werden.

**Nachteilig** hierbei ist jedoch, daß nur die Neigung der Fahrbahn in Längsrichtung gemessen werden kann und für eine Messung ein frei rollender Zustand herbeigeführt werden muß, um überhaupt eine Fahrbahnneigung zu erkennen.

Der Erfindung liegt daher die **Aufgabe** zugrunde, ein Verfahren anzugeben, das diese Nachteile behebt und die Zuverlässigkeit derartiger Systeme erhöht.

Diese Aufgabe wird erfindungsgemäß durch die Merkmale im Kennzeichen des Patentanspruches 1 **gelöst**. Hierbei wird ein fahrzustandsspezifischer Parameter, wie z.B. die Drehrate, gleichzeitig mit unterschiedlichen, im Fahrzeug vorhandenen Meßsystemen, die auf unterschiedlichen physikalischen Verfahren beruhen, gemessen und ein Größenvergleich dieser auf unterschiedliche Weise erhaltenen Werte des Parameters zur Erkennung einer quergerichteten Fahrbahnneigung benutzt.

Die mit der Erfindung erzielten Vorteile sind, die Zuverlässigkeit dieser Neigungserkennung und die einfache Handhabung, da beispielsweise in den meisten Fahrzeugen ein Drehratensensor, ein Querbeschleunigungssensor und ein Lenkwinkelsensor eingebaut sind. Mit diesen drei unterschiedlichen Systemen kann jeweils der gleiche fahrzeugzustandsspezifische Parameter, z.B. die Drehrate direkt gemessen, bzw. über die gemessene Querbeschleunigung und über den Lenkwinkel mit Hilfe der gemessenen Geschwindigkeit bestimmt werden. Bei den meisten Anwendungen ist es ausreichend zu erkennen, ob überhaupt eine Fahrbahnneigung vorhanden ist oder nicht, ohne einen genauen Wert der Fahrbahnneigung zu erfassen. Dadurch kann sichergestellt werden, daß z.B. die dynamische Fahrzeugregelung weiß, ob sie genau arbeitet oder nicht. Auch kann eine solche unkomplizierte, schnelle Erfassung einer Fahrbahnneigung dazu dienen, ein komplizierteres System zur exakten Bestimmung des Neigungswinkels zu aktivieren bzw. zu deaktivieren.

**Vorteilhafte Weiterbildungen** ergeben sich aus den Unteransprüchen. Durch einen einfachen Größenvergleich kann zwischen einer Rechtskurve und einer Linkskurve mit geneigter Fahrbahn unterschieden werden. Wird ein Neigungswinkel mit Hilfe diese Verfahrens erkannt, und wird dann von einem weiteren System dieser Neigungswinkel exakt gemessen, so kann mit Hilfe einer vorteilhaften Ausbildung dieses Verfahrens unter allen möglichen Bedingungen und immer zweifelsfrei zwischen einer tatsächlichen Fahrbahnneigung oder einem anderen Fahrzeugzustand unterscheiden. Fahrbahnunebenheiten, Schleudervorgänge und Kippvorgänge

können zuverlässig vom Durchfahren einer seitlich geneigten Kurve differenziert werden.

Im folgenden soll die Erfindung anhand eines Ausführungsbeispiels beschrieben werden.


Es zeigen:


Figur 1:     Fahrzeug mit Vorrichtungen zur Erkennung einer seitlich geneigten Fahrbahn in Kurven.
Figur 2:     Ablaufdiagramm zur Erkennung von seitlich geneigten Kurven.
Figur 3A:    Fahrzeug mit Darstellung der Drehrate, welche vom Drehratensensor bei einem Fahrzeug in einer Linkskurve mit geneigter Fahrbahn erfaßt wird.
Figur 3B:    Fahrzeug mit Darstellung der Drehrate, welche vom Drehratensensor bei einem Fahrzeug in einer Rechtskurve mit geneigter Fahrbahn erfaßt wird.
Figur 4A:    Fahrzeug mit Darstellung der Drehrate, weiche mit Hilfe des Lenkwinkelsensors bei einem Fahrzeug in einer Linkskurve mit geneigter Fahrbahn ermittelt wird.
Figur 4B:    Fahrzeug mit Darstellung der Drehrate, welche mit Hilfe des Lenkwinkelsensors bei einem Fahrzeug in einer Rechtskurve mit geneigter Fahrbahn ermittelt wird.
Figur 5A:    Fahrzeug mit Darstellung der Drehrate, welche mit Hilfe des Querbeschleunigungssensors bei einem Fahrzeug in einer Linkskurve mit geneigter Fahrbahn ermittelt wird.
Figur 5B:    Fahrzeug mit Darstellung der Drehrate, welche mit Hilfe des Querbeschleunigungssensors bei einem Fahrzeug in einer Rechtskurve mit geneigter Fahrbahn ermittelt wird.


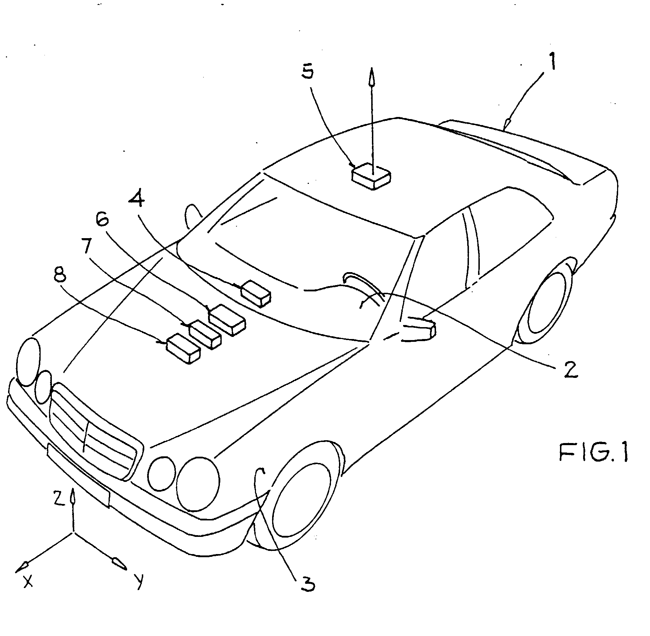

**Figur 1** zeigt ein Kraftfahrzeug **1**, welches alle Vorrichtungen enthält, um eine seitlich geneigte Kurve zu erkennen. In diesem Kraftfahrzeug befindet sich ein Lenkwinkelsensor **2**, der den Lenkwinkel $\delta$, also die Stellung der Räder, aufgrund eines Lenkausschlages ermittelt. Gleichfalls befindet sich ein Geschwindigkeitssensor **3** im Kraftfahrzeug **1**, welcher über die Anzahl der Radumdrehungen, die Geschwindigkeit **v** erfaßt. Ein Querbeschleunigungssensor **4** mißt die Querbeschleunigung $a_M$, welche senkrecht zur Geschwindigkeit **v** und parallel zur Fahrzeugebene steht. Der gleichfalls am Fahrzeug **1** befestigte Drehratensensor **5** mißt die Drehrate $\dot{\Psi}_D$, die senkrecht zur Geschwindigkeit **v** und senkrecht zur Fahrzeugebene steht. Die mittels der verschiedenen Sensoren erhaltenen Daten werden in eine Auswerteinheit **6** eingelesen, in der berechnet wird, ob eine seitlich geneigte Kurve durchfahren wird oder nicht. Die Information, ob eine derartige Kurve durchfahren wird oder nicht, bewirkt je nach Status, daß ein Wert in einem Zähler **7** erhöht oder erniedrigt wird. Liegt der Wert innerhalb eines definierten Bereichs, so wird die Information, ob eine seitlich geneigte Kurve vorliegt, an einen Verbraucher **8**, insbesondere eine fahrdynamische Stabilitätsregelung oder ein Kraftfahrzeugsicherheitssystem, weitergeleitet, der dann die entsprechenden Maßnahmen ergreift.

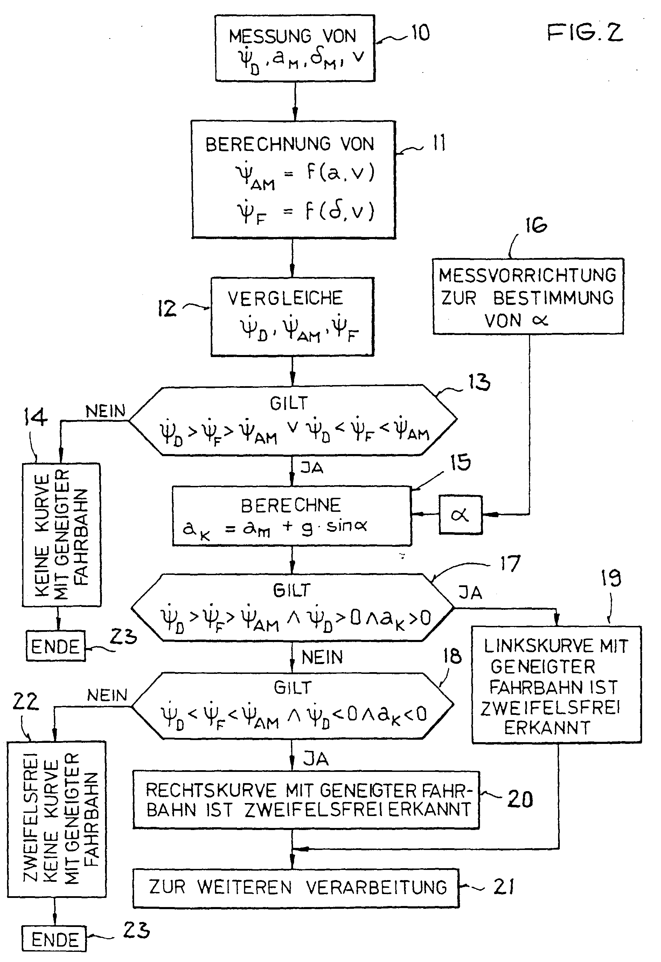

**Figur 2** zeigt ein Ablaufdiagramm zur Erkennung von seitlich geneigten Kurven. Im ersten Schritt **10** erfolgt die Messung der Drehrate $\dot{\Psi}_D$, der Querbeschleunigung $a_M$, des Lenkwinkels $\delta_M$ und der Geschwindigkeit v. Im Schritt **11** werden die weitere Drehraten:

$$\dot{\Psi}_{AM} = f(a_M, v) = \frac{a_M}{v} \ bzw. \ \dot{\Psi}_F = f(\delta_M, v) \ \text{berechnet.}$$


Im Schritt **12** erfolgt ein Größenvergleich, der auf unterschiedliche Art und Weise erhaltenen Drehraten. Ist die Bedingung:

$$\dot{\Psi}_D > \dot{\Psi}_F > \dot{\Psi}_{AM} \ \text{oder} \ \dot{\Psi}_D < \dot{\Psi}_F < \dot{\Psi}_{AM}$$

nicht erfüllt, so wird im Schritt **14** zweifelsfrei erkannt, daß keine Kurve mit geneigter Fahrbahn vorliegt. Dadurch wird im Schritt **23** das Ermittlungsverfahren beendet. Ist jedoch eine der Bedingungen aus Schritt **12** erfüllt, so wird in einem weiteren Schritt **16** mittels Meßvorrichtung der Neigungswinkel $\alpha$ bestimmt und für die Berechnung einer um die Erdbeschleunigung korrigierten Querbeschleunigung im Schritt **15** hinzugezogen. Bis zu diesem Punkt kann nicht 100% sichergestellt werden, daß das Fahrzeug tatsächlich eine Kurve mit geneigter Fahrbahn durchfährt. Aus diesem Grund müssen weitere Wertbetrachtungen, wie sie in Schritt **17** und **18** dargestellt sind, erfolgen. Ist wie in Schritt **17** dargestellt, die Bedingung: $\dot{\Psi}_D > \dot{\Psi}_F > \dot{\Psi}_{AM} \wedge \dot{\Psi}_D > 0 \wedge a_K > 0$ erfüllt, so wird in Schritt **19** zweifelsfrei eine Linkskurve mit geneigter Fahrbahn erkannt. Der mittels einer Meßvorrichtung bestimmte Neigungswinkel $\alpha$ wird, wie in Schritt **16** dargestellt, damit verifiziert. Alle Daten werden freigegeben und können dann in Schritt **21** für die Weiterverarbeitung in anderen Systemen, insbesondere einer fahrdynamischen Stabilitätsregelung oder einem Kraftfahrzeugsicherheitssystem verwendet werden. Gilt die Bedingung nicht, so wird in Schrift **18** die Bedingung: $\dot{\Psi}_D < \dot{\Psi}_F < \dot{\Psi}_{AM} \wedge \dot{\Psi}_D < 0 \wedge a_K < 0$ überprüft. Ist diese erfüllt, so wird in Schrift **20** zweifelsfrei eine Rechtskurve mit geneigter Fahrbahn erkannt. Die Daten werden dann in Schrift **21** für die Weiterverarbeitung in anderen Systemen, insbesondere einer fahrdynamischen Stabilitätsregelung oder einem Kraftfahrzeugsicherheitssystem zur Verfügung gestellt. Ist jedoch die Bedingung in Schrift **18** nicht erfüllt, so wird in Schrift **22** zweifelsfrei erkannt, daß keine Kurve mit geneigter Fahrbahn vorliegt. Darauf werden in Schrift **23** weitere Berechnungen beendet.

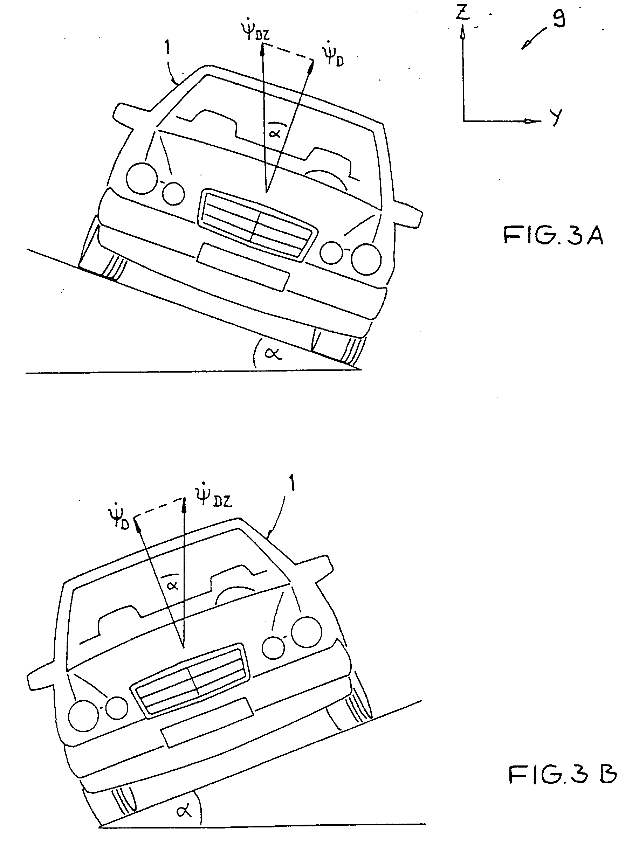

**Figur 3A** zeigt ein Fahrzeug in einer Linkskurve. Die Fahrbahn ist in der Kurve um den Winkel $\alpha$ geneigt. Die Drehrate $\dot{\Psi}_D$, welche vom Drehratensensor gemessen wird, steht senkrecht zur geneigten Fahrbahnebene. Die Drehrate, die tatsächlich in z-Richtung weist, wie im Koordinatensystem **9** dargestellt, ist mit $\dot{\Psi}_{Dz}$ bezeichnet. Es gilt:

$$\frac{|\dot{\Psi}_D|}{|\dot{\Psi}_{Dz}|} = \cos\alpha$$

**Figur 3B** zeigt ein Fahrzeug in einer Rechtskurve. Die Fahrbahn ist in der Kurve um den Winkel $\alpha$ geneigt. Die Drehrate $\dot{\Psi}_D$, welche vom Drehratensensor gemessen wird, steht senkrecht zur geneigten Fahrbahnebene. Die Drehrate, die tatsächlich in z-Richtung weist, wie im Koordinatensystem **9** dargestellt, ist mit $\dot{\Psi}_{Dz}$ bezeichnet. Es gilt:

$$\frac{|\dot{\Psi}_D|}{|\dot{\Psi}_{Dz}|} = \cos\alpha$$

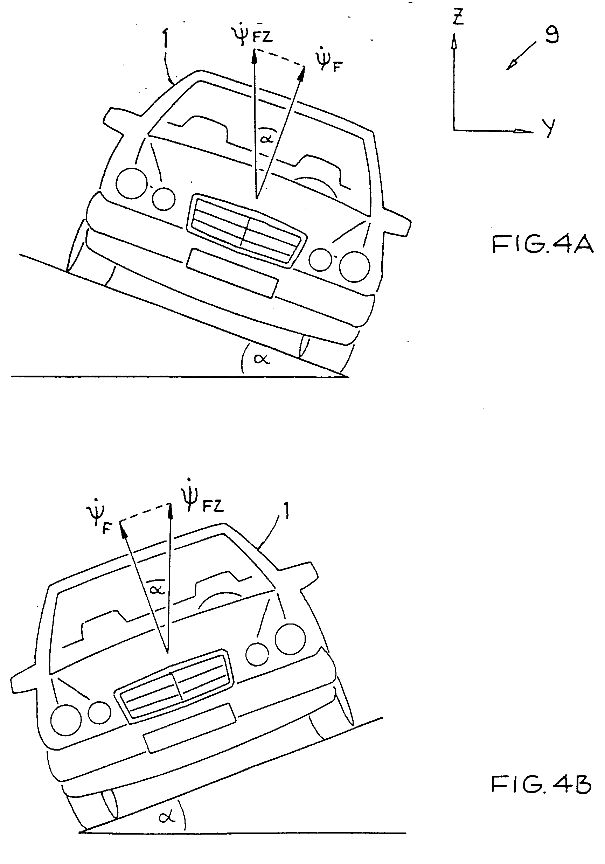

**Figur 4A** zeigt ein Fahrzeug in einer Linkskurve. Die Fahrbahn ist in der Kurve um den Winkel $\alpha$ geneigt. Die Drehrate $\dot{\Psi}_F$, welche mit Hilfe des Lenkwinkelsensors berechnet wird, steht senkrecht zur geneigten Fahrbahnebene. Die Drehrate, die tatsächlich in z-Richtung weist, ist mit $\dot{\Psi}_{Fz}$ bezeichnet. Es gilt:

$$\frac{|\dot{\Psi}_F|}{|\dot{\Psi}_{Fz}|} = \cos\alpha \wedge |\dot{\Psi}_F| = f(\delta_M, v)$$

wobei $\delta_M$, der vom Lenkwinkelsensor gemessene Lenkwinkel und v die gemessene Geschwindigkeit des Fahrzeugs ist.

Des weiteren gilt per Definition, daß der Lenkwinkel $\delta_M$ in einer Linkskurve stets positiv ist.

**Figur 4B** zeigt ein Fahrzeug in einer Rechtskurve. Die Fahrbahn ist in der Kurve um den Winkel $\alpha$ geneigt. Die Drehrate $\dot{\Psi}_F$, welche mit Hilfe des Lenkwinkelsensors berechnet wird, steht senkrecht zur geneigten Fahrbahnebene. Die Drehrate, die tatsächlich in z-Richtung weist, ist mit $\dot{\Psi}_{Fz}$ bezeichnet. Es gilt:

$$\frac{|\dot{\Psi}_F|}{|\dot{\Psi}_{Fz}|} = \cos\alpha \wedge |\dot{\Psi}_F| = f(\delta_M, v)$$

wobei $\delta_M$, der vom Lenkwinkelsensor gemessene Lenkwinkel und v die gemessene Geschwindigkeit des Fahrzeugs ist. Des weiteren gilt per Definition, daß der Lenkwinkel $\delta_M$ in einer Rechtskurve stets negativ ist.

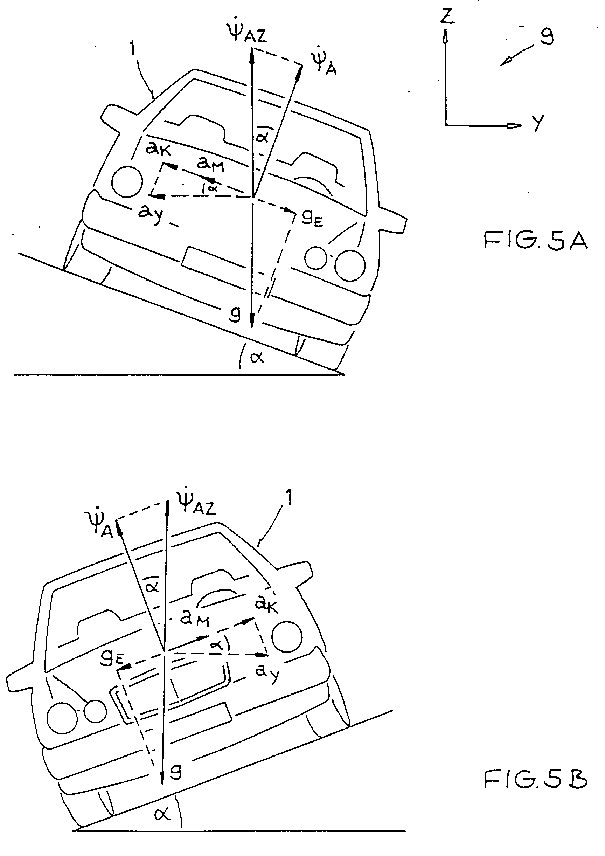

**Figur 5A** zeigt ein Fahrzeug in einer Linkskurve. Die Fahrbahn ist in der Kurve um den Winkel $\alpha$ geneigt. Die Drehrate $\dot{\Psi}_{AM}$, welche mit Hilfe des Querbeschleunigungssensors berechnet wird, steht senkrecht zur geneigten Fahrbahnebene. Es gilt:

$$|\dot{\Psi}_{AM}| = \left|\frac{a_M}{v}\right|$$

wobei $a_M$, die vom Querbeschleunigungssensor gemessene Querbeschleunigung und $v$ die gemessene Geschwindigkeit des Fahrzeugs ist. Jedoch ist dieser berechnete Wert durch die mitgemessene Erdbeschleunigung $g$ verfälscht. Wird dieser Fehler herausgerechnet so gilt:

$$\frac{|\dot{\Psi}_A|}{|\dot{\Psi}_{Az}|} = \cos\alpha \wedge |\dot{\Psi}_A| = \left|\frac{a_K}{v}\right| = \left|\frac{a_M + g \cdot \sin\alpha}{v}\right|$$

wobei $a_K$ die korrigierte gemessene Querbeschleunigung ist, aus der der Anteil der Erdbeschleunigung herausgerechnet ist. Die um den Anteil der Erdbeschleunigung bereinigte Drehrate, die tatsächlich in z-Richtung weist, ist mit $\dot{\Psi}_{Az}$ bezeichnet. Der Anteil der Querbeschleunigung, die tatsächlich in y-Richtung weist, wie im Koordinatensystem **9** dargestellt, ist mit $a_Y$ bezeichnet. Des weiteren gilt per Definition, daß die Querbeschleunigung $a_Y$ in einer Linkskurve stets positiv ist.

**Figur 5B** zeigt ein Fahrzeug in einer Rechtskurve. Die Fahrbahn ist in der Kurve um den Winkel $\alpha$ geneigt. Die Drehrate $\dot{\Psi}_{AM}$, welche mit Hilfe des Querbeschleunigungssensors berechnet wird, steht senkrecht zur geneigten Fahrbahnebene. Es gilt:

$$|\dot{\Psi}_{AM}| = \left|\frac{a_M}{v}\right|$$

wobei $a_M$, die vom Querbeschleunigungssensor gemessene Querbeschleunigung und $v$ die gemessene Geschwindigkeit in x-Richtung des Fahrzeugs ist.

Jedoch ist dieser berechnete Wert durch die mitgemessene Erdbeschleunigung $g$ verfälscht. Wird dieser Fehler herausgerechnet so gilt:

$$\frac{|\dot{\Psi}_A|}{|\dot{\Psi}_{Az}|} = \cos\alpha \wedge |\dot{\Psi}_A| = \left|\frac{a_K}{v}\right| = \left|\frac{a_M + g \cdot \sin\alpha}{v}\right|$$

wobei $a_K$ die korrigierte gemessene Querbeschleunigung ist, aus der der Anteil der Erdbeschleunigung herausgerechnet ist. Die um den Anteil der Erdbeschleunigung bereinigte Drehrate, die tatsächlich in z-Richtung weist, ist mit $\dot{\Psi}_{Az}$ bezeichnet. Der Anteil der Querbeschleunigung, die tatsächlich in y-Richtung weist, wie im Koordinatensystem **9** dargestellt, ist mit $a_Y$ bezeichnet. Des weiteren gilt per Definition, daß die Querbeschleunigung $a_Y$ in einer Rechtskurve stets negativ ist.

Wird eine Kurve mit seitlich geneigter Fahrbahn durchfahren, so sind folgende Erfahrungswerte bekannt. Die mit dem Drehratensensor gemessene Drehrate hat immer den höchsten Betrag, sie wird nur durch den Neigungswinkel der Fahrbahn beeinflußt. Der Lenkwinkel beim Durchfahren einer Kurve mit geneigter Fahrbahn ist aufgrund der Zentrifugalkraft immer geringer, wie in einer Kurve mit ebener Fahrbahn. Die Kurvenfahrt ist aufgrund der geneigten Fahrbahn zumindest teilweise erzwungen. Die Drehrate, die sich aus dem gemessenen Lenkwinkel berechnet, wird zusätzlich von der Zentrifugalkraft beeinflußt. Die Drehrate, die sich aus der Querbeschleunigung berechnet, wird zusätzlich von der Gravitationskraft verfälscht. Der Einfluß der Gravitationskraft ist immer größer wie der Einfluß Zentrifugalkraft.

Aufgrund dieser Überlegung und aus den Figuren wird deutlich, daß bei Kurvenfahrten mit geneigter Fahrbahn folgende Bedingungen erfüllt sein müssen.

Beim Durchfahren einer Linkskurve mit geneigter Fahrbahn muß gelten:

$$\dot{\Psi}_D > \dot{\Psi}_F > \dot{\Psi}_{AM}$$

Beim Durchfahren einer Rechtskurve mit geneigter Fahrbahn muß gelten:

$$\dot{\Psi}_D < \dot{\Psi}_F < \dot{\Psi}_{AM}$$

Ist eine dieser Bedingungen erfüllt, so ist dies ein Indiz dafür, daß eine Kurve mit geneigter Fahrbahn durchfahren wird. Nun kann z.B. eine dynamische Fahrzeugregelung, die bei geneigten Kurven unzulässig arbeitet und keine Korrekturberechnungen hinsichtlich der Neigung durchführt, abgeschaltet werden oder aber es wird z.B. bei einer dynamischen Fahrzeugregelung, bei welcher Korrekturberechnungen hinsichtlich des Neigungswinkels möglich sind, eine Vorrichtung zur exakten Berechnung des Neigungswinkel aktiviert. Ist der Neigungswinkel bekannt, so kann eine weitere Abfrage aktiviert werden, die dazu dient die Kurvenfahrt bei geneigter Fahrbahn eindeutig zu verifizieren. Bei einer Kurvenfahrt auf geneigter Fahrbahn müssen folgende Bedingungen erfüllt sein, um zweifelsfrei diesen Zustand bestimmen zu können.

Bei einer geneigten Linkskurve muß gelten:

$$\dot{\Psi}_D > \dot{\Psi}_F > \dot{\Psi}_{AM} \wedge \dot{\Psi}_D > 0 \wedge a_K = a_M + g \cdot \sin\alpha > 0$$

Bei einer geneigten Rechtskurve muß gelten

$$\dot{\Psi}_D > \dot{\Psi}_F > \dot{\Psi}_{AM} \wedge \dot{\Psi}_D > 0 \wedge a_K = a_M + g \cdot \sin\alpha > 0$$

Werden diese Bedingungen erfüllt, so ist der Zustand der Kurvenfahrt auf geneigter Fahrbahn zweifelsfrei erkannt. Eine Vorrichtung, die unter diesen Bedingungen fehlerhaft arbeitet, kann dann ausgeschaltet werden oder es können bei Systemen, die diesen Zustand mit berücksichtigen, korrigierende Maßnahmen aktiviert werden.

Um die Zuverlässigkeit eines solchen Systems weiter zu erhöhen, kann in einer Vorrichtung, die gemäß diesem Verfahren arbeitet, zusätzlich ein Zähler installiert werden. Wenn die vorab beschriebenen Bedingungen erfüllt sind, und der Winkel $\alpha$ einen bestimmten Wert z.B. 10° übersteigt, dann wird der Wert des Zählers z.B. alle 7ms um 1 erhöht. Überschreitet der Zähler beispielsweise den Wert 25, so ist die Kurve mit Querneigung erkannt. Bleiben die Bedingungen erfüllt, so wird der Zähler beispielsweise maximal bis zum Wert 40 hochgezählt. Sind die Bedingungen nicht mehr gegeben, so wird der Zähler dekrementiert, bis beispielsweise auf den Wert 0. Beim Unterschreiten des Wertes 25 wird dann vom System keine Neigung mehr erkannt.

Es ist naheliegend, daß dieses Verfahren auch durch einen Vergleich der entsprechenden gemessenen und berechneten Querbeschleunigungen oder Lenkwinkel realisiert werden kann. Grundlegend ist dabei nur, daß ein und derselbe Parameter mit unterschiedlichen Meßsystemen gemessen wird, wobei die auf unterschiedliche Weise erzielten Meßergebnisse in einer Kurve mit Querneigung unterschiedliche Meßfehler beinhalten. Bei einer Fahrt auf einer nicht geneigten Fahrbahn wären die Ergebnisse jedoch identisch. Aufgrund dieser Meßfehler, die durch die Fahrbahnneigung zustande kommen, können Rückschlüsse auf die Fahrbahnneigung getroffen werden.

**Patentansprüche**

1. Verfahren zum Erkennen von einer von einem Kraftfahrzeug durchfahrenen seitlich geneigten Kurve, **dadurch gekennzeichnet, daß** für einen fahrzustandsspezifischen Parameter des Kraftfahrzeugs, insbesondere die Drehrate ($\dot{\Psi}$), die Querbeschleunigung (a) oder der Lenkwinkel ($\delta$)

   - gleichzeitig, mittels unterschiedlicher Meßsysteme, die auf unterschiedliche physikalische Verfahren beruhen, jeweils ein Wert dieses Parameters ermittelt wird und
   - ein Größenvergleich der Beträge dieser zeitgleich auf unterschiedliche Weise ermittelten Werte zur Erkennung der seitlich geneigten Kurve dient.

2. Verfahren nach Patentanspruch 1, **dadurch gekennzeichnet, daß** der fahrzustandsspezifische Parameter des Kraftfahrzeugs die Drehrate ($\dot{\Psi}$) ist und

   - ein erster Drehratenwert ($\dot{\Psi}_D$) von einem Drehratensensor gemessen wird, und
   - ein zweiter Drehratenwert ($\dot{\Psi}_{AM}$) aus der von einem Querbeschleunigungssensor zeitgleich gemessenen Querbeschleunigung ($a_M$) und der ebenfalls mittels Geschwindigkeitssensor zeitgleich gemessenen Fahrzeuggeschwindigkeit (v) berechnet wird und
   - ein dritter Drehratenwert ($\dot{\Psi}_F$) aus dem von einem Lenkwinkelsensor zeitgleich gemessenen Lenkwinkel ($\delta_M$) und der ebenfalls mittels Geschwindigkeitssensor zeitgleich gemessenen Fahrzeuggeschwindigkeit (v) berechnet wird.

3. Verfahren nach Patentanspruch 1, **dadurch gekennzeichnet, daß** der fahrzustandsspezifische Parameter des Kraftfahrzeugs die Querbeschleunigung (a) ist und

   - ein erster Querbeschleunigungswert ($a_M$) von einem Querbeschleunigungssensor gemessen wird, und

- ein zweiter Querbeschleunigungswert ($a_\Psi$) aus der von einem Drehratensensor zeitgleich gemessenen Drehrate ($\Psi_M$) und der ebenfalls mittels Geschwindigkeitssensor zeitgleich gemessenen Fahrzeuggeschwindigkeit (v) berechnet wird und

- ein dritter Querbeschleunigungswert ($a_\delta$) aus dem von einem Lenkwinkelsensor zeitgleich gemessenen Lenkwinkel ($\delta_M$) und der ebenfalls mittels Geschwindigkeitssensor zeitgleich gemessenen Fahrzeuggeschwindigkeit (v) berechnet wird.

4. Verfahren nach Patentanspruch 1, **dadurch gekennzeichnet, daß** der fahrzustandsspezifische Parameter des Kraftfahrzeugs der Lenkwinkel ($\delta$) ist und

- ein erster Lenkwinkelwert ($\delta_M$) von einem Lenkwinkelsensor gemessen wird, und
- ein zweiter Lenkwinkelwert ($\delta_a$) aus der von einem Querbeschleunigungssensor zeitgleich gemessenen Querbeschleunigung und der ebenfalls mittels Geschwindigkeitssensor zeitgleich gemessenen Fahrzeuggeschwindigkeit (v) berechnet wird und
- ein dritter Lenkwinkelwert ($\delta_\Psi$) aus der von einem Drehratensensor zeitgleich gemessenen Drehrate und der ebenfalls mittels Geschwindigkeitssensor zeitgleich gemessenen Fahrzeuggeschwindigkeit berechnet wird.

5. Verfahren nach Anspruch 2, 3 oder 4, **dadurch gekennzeichnet, daß** hierbei die gleichzeitig ermittelten ersten, zweiten und dritten Werte ($\Psi_D$, $\Psi_F$, $\Psi_{AM}$) des fahrzustandsspezifischen Parameters des Kraftfahrzeugs nach der Größe sortiert werden und die Reihenfolge, der auf unterschiedliche Weise ermittelten Werte eine seitlich geneigte Rechtskurve, eine seitlich geneigte Linkskurve oder aber das Fehlen einer Fahrbahnneigung anzeigt.

6. Verfahren nach einem der vorangegangenen Ansprüche, **dadurch gekennzeichnet, daß** der Querneigungswinkel ($\alpha$) zwischen der Querachse des Fahrzeugs und der Horizontalen gemessen wird.

7. Verfahren nach Anspruch 6, **dadurch gekennzeichnet, daß** die gemessene Querbeschleunigung ($a_M$) auf eine korrigierte Querbeschleunigung ($a_K$) berichtigt wird, indem der gemessene Querbeschleunigungswert ($a_M$) um den Anteil der Erdbeschleunigung (g), der abhängt von dem Querneigungswinkel ($\alpha$), korrigiert wird.

8. Verfahren nach Anspruch 7, **dadurch gekennzeichnet, daß** die beiden Vorzeichen des korrigierten Querbeschleunigungswertes ($a_K$) und des zeitgleich mit dem Drehratensensor gemessenen Drehratenwertes ($\Psi_D$) zur Beurteilung der Neigung der Fahrbahn verwendet werden.

9. Verfahren nach einem der vorangegangenen Ansprüche, **dadurch gekennzeichnet, daß** mit Hilfe eines Zählers in einem festgelegten Takt das Vorhandensein der Fahrbahnneigung überprüft wird und der Zähler, jedesmal wenn eine Neigung der Fahrbahn vom Neigunssensor erkannt wird, seinen Wert erhöht.

10. Verfahren nach einem der vorangegangenen Ansprüche, **dadurch gekennzeichnet, daß** mit Hilfe eines Zählers in einem festgelegten Takt das Vorhandensein der Fahrbahnneigung überprüft wird und der Zähler, jedesmal wenn ein Fehlen der Fahrbahnneigung vom Neigungssensor erkannt wird, seinen Wert erniedrigt.

11. Verfahren nach Anspruch 9 und 10, **dadurch gekennzeichnet, daß** eine Fahrbahnneigung nur dann an eine fahrzeugdynamische Stabilitätsregelung, eine Kraftfahrzeugsicherheitseinrichtung oder an den Fahrer weitergeleitet wird, wenn im Zähler ein definierter Wertebereich über- oder unterschritten wird.

FIG.1

FIG. 2

MESSUNG VON $\dot{\psi}_D, a_M, \delta_M, v$ — 10

BERECHNUNG VON $\dot{\psi}_{AM} = f(a,v)$ $\dot{\psi}_F = f(\delta,v)$ — 11

MESSVORRICHTUNG ZUR BESTIMMUNG VON $\alpha$ — 16

12 — VERGLEICHE $\dot{\psi}_D, \dot{\psi}_{AM}, \dot{\psi}_F$

GILT $\dot{\psi}_D > \dot{\psi}_F > \dot{\psi}_{AM} \vee \dot{\psi}_D < \dot{\psi}_F < \dot{\psi}_{AM}$ — 13

NEIN

14 — KEINE KURVE MIT GENEIGTER FAHRBAHN

JA

BERECHNE $a_K = a_m + g \cdot \sin\alpha$ — 15

$\alpha$

GILT $\dot{\psi}_D > \dot{\psi}_F > \dot{\psi}_{AM} \wedge \dot{\psi}_D > 0 \wedge a_K > 0$ — 17

JA

LINKSKURVE MIT GENEIGTER FAHRBAHN IST ZWEIFELSFREI ERKANNT — 19

ENDE — 23

NEIN

GILT $\dot{\psi}_D < \dot{\psi}_F < \dot{\psi}_{AM} \wedge \dot{\psi}_D < 0 \wedge a_K < 0$ — 18

NEIN

22 — ZWEIFELSFREI KEINE KURVE MIT GENEIGTER FAHRBAHN

JA

RECHTSKURVE MIT GENEIGTER FAHRBAHN IST ZWEIFELSFREI ERKANNT — 20

ZUR WEITEREN VERARBEITUNG — 21

ENDE — 23

FIG. 3A

FIG. 3 B

FIG.4A

FIG.4B

FIG.5A

FIG.5B